# EUROPEAN PATENT APPLICATION

(11) **EP 4 653 251 A1**
(43) Date of publication of application: **26.11.2025**
(21) Application number: 24177933.9
(22) Date of filing: 24.05.2024
(51) Int. Cl.: B60L 53/67, B60L 53/30, B60L 53/14

(54) **DC CHARGING DISTRIBUTION UNIT AND DC CHARGING SYSTEM INCLUDING THE DC CHARGING DISTRIBUTION UNIT**

(71) Applicant: ABB E-mobility B.V., 2629 JG Delft (NL)
(72) Inventor: LA ROSA, Cristoforo, 52025 Montevarchi (IT); NEDERSTIGT, Bart, 2311XX Leiden (NL); TROVA, Marco, 52025 Arezzo (IT)
(74) Representative: Zimmermann & Partner Patentanwälte mbB

(57) **Abstract**

A DC charging distribution unit (UU1) includes a first primary-side terminal (UU1F1) for receiving a first input current from a power unit (PU, PU1, PU2), a secondary-side DC vehicle connection terminal (UU1S2) connectible to a vehicle for providing a vehicle charging current (id1), a first secondary-side power sharing terminal (UU1S3) connectible to another DC charging distribution unit for providing a sharing current to the other DC charging distribution unit, and a current distributor (S1; S1-1, S1-2, S1-3) being operable to select between a vehicle-charging configuration in which the first input current is used to feed the secondary-side DC vehicle connection terminal (UU1S2) with the vehicle charging current and a power-sharing configuration in which the first input current is used to feed the first secondary-side power sharing terminal with the sharing current.

A DC charging system includes at least one power unit (PU, PU1, PU2) and at least a first distribution unit (UU1) and a second distribution unit (UU2), wherein each power unit (PU, PU1, PU2) includes at least one power terminal (PT1...PT8), wherein the distribution units (UU1, UU2) are each spaced apart from the power unit by at least a first distance (d1) and wherein neighboring ones of the distribution units are spaced apart from each other by at most a second distance (d2), wherein neighboring ones of the distribution units (UU1, UU2) are connected to one another, at their secondary-side power sharing terminals (UU1S1, UU1S3; UU2S1, UU2S3), via a first secondary-side link (SSL1), and wherein at least one of the primary-side terminals (UU1F1, UU1F2; UU2F1, UU2F2) of the first and second distribution units (UU1, UU2) is electrically connected, via a primary-side link (FSL11, FSL12; FSL21, FSL22), to the power terminal (PT1...PT8) of the at least one power unit (PU, PU1, PU2).

## Description

### TECHNICAL FIELD

The present disclosure generally relates to DC charging distribution units, in particular DC charging distribution units used for charging electric vehicles, and DC charging systems including such DC charging distribution units.

### BACKGROUND

DC charging power at a charging site, for example in a charging station for electric vehicles (EV), is distributed to the power outlets on site. Conventionally, in an "all-in-one" charger type, a power unit located at a distance from the power outlets is connected, via a DC link or DC cable, to a distribution unit, or user unit, in which the power outlets are located. In an alternative conventional configuration of a "split system" type, on central power unit feeds multiple user units. Each user unit is connected via a separate DC link to the central power unit, and each user unit is allocated through a switch matrix inside the power unit.

The conventional units and systems lack flexibility, in particular when it comes to adapting the on-site power outlets to increasing or decreasing need. There is a desire for a more flexible DC charging distribution configuration.

### SUMMARY

According to an aspect of the present disclosure, a DC charging distribution unit includes a first primary-side terminal, a secondary-side DC vehicle connection terminal, a first secondary-side power sharing terminal, and a current distributor. The first primary-side terminal is configured to receive a first input current from a power unit. The secondary-side DC vehicle connection terminal is connectible to a vehicle and configured to provide a vehicle charging current. The first secondary-side power sharing terminal is connectible to another DC charging distribution unit for providing a sharing current to the other DC charging distribution unit. The current distributor is operable to select between a vehicle-charging configuration and a power-sharing configuration. In the vehicle-charging configuration, the first input current is used to feed the secondary-side DC vehicle connection terminal with the vehicle charging current. In the power-sharing configuration, the first input current is used to feed the first secondary-side DC power sharing terminal with the sharing current.

According to another aspect of the present disclosure, a DC charging system includes at least one power unit, and at least a first charging distribution unit and a second charging distribution unit as disclosed herein. For example, the first and second distribution units are neighboring distribution units. Each power unit includes at least one power terminal. The distribution units are each spaced apart from the power unit by at least a first distance. Neighboring ones of the distribution units are spaced apart from each other by at most a second distance. Neighboring ones of the distribution units are connected to each other - at their secondary-side power sharing terminals - via a first secondary-side link. At least one of the primary-side terminals of the first and second distribution units is connected - via a primary-side link - to the power terminal of the at least one power unit.

A power unit, as used herein, is typically a device that is connected to a power grid, such as a public AC grid. A typical power unit is configured to receive, at its primary side, AC power from the AC grid, convert it into DC power, and output the DC power at its primary side, and/or vice-versa. The power unit typically includes power electronics and may thus occupy a relatively large space. Typically, the power unit is installed at a location where the surrounding conditions are favorable, such as accessibility of the power grid, connectivity to the power grid, available space, cooling conditions etc. The power unit is typically located at a certain distance to the site where the vehicle is to be charged, e.g. a parking lot, and where the surrounding conditions for positioning the power unit would not be as favorable.

A DC charging distribution unit, as used herein, is typically located at a certain distance from the power unit. The DC charging distribution unit may be comparatively small compared to the power unit.

Throughout the specification, the DC charging distribution unit may be abbreviated as distribution unit, and/or may also be referred to as a user unit because of its location relatively close to a user, or operator, of a vehicle that the user connects to the distribution unit in order to charge the vehicle's batteries.

Charging, as used herein, is understood as an illustrative rather than a restrictive term. Charging may include a flow of power (a current flow) in either a direction from the distribution unit towards a vehicle connected to the secondary-side DC vehicle connection terminal, or a direction from the secondary-side DC vehicle connection terminal towards the distribution unit. Moreover, charging may also include a supply of electrical power to the vehicle that is used for purposes other than raising the state of charge (SoC) of the vehicle's batteries, e.g. power consumed by on-board equipment. Furthermore, charging may include a supply of electrical power to the vehicle that is only indirectly used for raising the SoC of the batteries.

A primary-side DC terminal, as used herein, is typically any kind of connectivity-establishing or connectivity-enabling means that makes the reception of the first input current possible. This may include a plug/socket connection, but hard-wiring of the primary-side terminal is also possible. A connection to the secondary side of the power unit can be established via the primary-side terminal to receive the power output by the power unit, i.e. a current (the first input current) at a certain voltage.

A secondary-side DC vehicle connection terminal, as used herein, is typically any kind of connectivity-establishing or connectivity-enabling means that makes the reception of the vehicle charging current possible, and typically includes a plug/socket connection. A secondary-side DC power sharing terminal, as used herein, is typically any kind of connectivity-establishing or connectivity-enabling means that makes the reception of the vehicle charging current possible, and may include a plug/socket connection or a hardwired connection.

In embodiments, the distribution unit includes a second secondary-side power sharing terminal. The second secondary-side power sharing terminal is connected, optionally internally connected, to the first primary-side terminal. The second secondary-side power sharing terminal is connectible to yet another charging distribution unit. In this way, input power can be obtained from the second secondary-side power sharing terminal, i.e. from the yet another charging distribution unit. This enables a cascading of distribution units for power exchange on the secondary side thereof.

In embodiments, the distribution unit includes a second primary-side terminal for receiving a second input current from a power unit. The power unit may be the same as the one from which the first input current is received, or may be different from that. The current distributor is operable to select further between a combined input configuration and an individual-input configuration. In the combined input configuration, the first and second primary-side terminals are combined. Typically, the combined input switch configuration is available for both the vehicle-charging configuration and the power-sharing configuration. In the individual-input configuration, the first and second primary-side terminals are disconnected from each other.

Typically, the individual-input configuration is available for the vehicle-charging configuration in which the first primary-side terminal, but not the second primary-side terminal is connected to the secondary-side DC vehicle connection terminal. In addition, typically, the individual-input configuration is available for an individual-power-sharing configuration in which the second primary-side terminal, but not the first primary-side terminal is connected to the first secondary-side power sharing terminal. This may help to enhance the flexibility even further.

The switch is configured for galvanically insulating, in any switch position, the secondary-side DC vehicle connection terminal (UU1S2) from the first secondary-side DC power sharing terminal (UU1S3).

Typically, in the vehicle-charging switch configuration, the secondary-side DC vehicle connection terminal (UU1S2) and the first primary-side DC terminal (UU1F1) is disconnected from the first secondary-side DC power sharing terminal (UU1S3) for galvanically insulating the secondary-side DC vehicle connection terminal (UU1S2) from the first secondary-side DC power sharing terminal (UU1S3).

Typically, in the power-sharing switch configuration, the first primary-side DC terminal (UU1F1) is disconnected from the secondary-side DC vehicle connection terminal (UU1S2) for galvanically insulating the secondary-side DC vehicle connection terminal (UU1S2) from the first secondary-side DC power sharing terminal (UU1S3).

In embodiments, the distribution unit further includes a power converter. The power converter is configured to convert the first and/or the second input currents into the vehicle charging current and/or the sharing current. A power converter may help to increase the flexibility, e.g. making it adaptable to either or both of DC and AC input power.

In embodiments, the first and/or second input currents are DC currents. Then, the current distributor may be configured as a switch assembly, the vehicle-charging configuration is a vehicle-charging switch configuration, and the power-sharing configuration is a power-sharing switch configuration. In the vehicle-charging switch configuration, the first primary-side terminal is connected to the secondary-side DC vehicle connection terminal. In the power-sharing configuration, the first primary-side terminal is connected to the first secondary-side power sharing terminal.

In embodiments in which the first and/or second input currents are DC currents, the current distributor may be configured as a switch assembly, the vehicle-charging configuration is a vehicle-charging switch configuration, and the power-sharing configuration is a power-sharing switch configuration, as described above, the individual-input configuration includes a vehicle-charging configuration, in which the first primary-side terminal but not the second primary-side terminal is connected to the secondary-side DC vehicle connection terminal, and an individual-power-sharing configuration in which the second primary-side terminal but not the first primary-side terminal is connected to the first secondary-side power sharing terminal.

In embodiments, in a DC charging system as described herein, wherein a maximum vehicle charging current at the secondary-side DC vehicle connection terminal of the first distribution unit is less than or equal the sum of a current carrying capacity of the primary-side link of the first user unit and a current carrying capacity of the secondary-side link between the first user unit and the second user unit.

Typically, the current carrying capacity is directly related to the maximum power that can be delivered at a specific link voltage. Particularly in the case of primary-side DC links and switch assemblies used as current distributors, as described herein, the voltage is typically the same between the primary-side DC link and the secondary-side terminals, and the current carrying capacities can be considered as power exchange capacities on that voltage level.

In embodiments, a DC charging system as described herein includes a third distribution unit. The distribution units are connected to one another, at their secondary-side power sharing terminals, via respective secondary-side DC links (SSL1, SSL2). A maximum first vehicle charging current at the secondary-side DC vehicle connection terminal of the first distribution unit is less than or equal to the sum of the current-carrying capacities of the primary-side DC links of the first through third user units. The current carrying capacities of the secondary-side DC link between the first distribution unit and the second distribution unit and of the secondary-side DC link between the second distribution unit and the third distribution unit are designed to be at least said sum.

In embodiments, one or more of the secondary-side links are serial-connection links. In a serial-connection configuration, the first secondary-side power sharing terminal of a distribution unit serves as a power output terminal, and the third secondary-side power sharing terminal of another distribution unit serves as a power input terminal. For example, the first secondary-side power sharing terminal of the first distribution unit is connected to the third secondary-side power sharing terminal of the second distribution unit, the first secondary-side power sharing terminal of the first distribution unit serves as the power output terminal, and the third secondary-side power sharing terminal of the second distribution unit serves as the power input terminal. For example, the first secondary-side power sharing terminal of the second distribution unit is connected to the third secondary-side power sharing terminal of the third distribution unit, the first secondary-side power sharing terminal of the second distribution unit serves as the power output terminal, and the third secondary-side power sharing terminal of the third distribution unit serves as the power input terminal. In this way, the distribution units may be serially cascaded.

In embodiments, in a DC charging system as described herein, the first secondary-side power sharing terminal of each distribution unit is connected to the second secondary-side power sharing terminal of its respective neighboring distribution unit.

In embodiments, one or more of the secondary-side links are parallel-connection links. In a parallel-connection configuration, the first secondary-side power sharing terminal of a distribution unit is connected to the first secondary-side power sharing terminal of another distribution unit. For example, the first secondary-side power sharing terminal of the first distribution unit is connected to the first secondary-side power sharing terminal of the second distribution unit. For example, the first secondary-side power sharing terminal of the second distribution unit is connected to the first secondary-side power sharing terminal of the third distribution unit. In this way, the distribution units may be combined in parallel.

In embodiments, in a DC charging system as described herein, the first secondary-side power sharing terminals of each distribution unit and its respective neighboring distribution unit are connected to each other via a respective secondary-side link.

### BRIEF DESCRIPTION OF THE DRAWINGS

Figs. 1 and 2 each show configurations of conventional DC charging systems.
Figs. 3a through 4b each show exemplary configurations of DC charging distribution units according to embodiments.
Figs. 5 through 10 each show exemplary configurations of DC charging systems using DC charging distribution units as described herein.

### DETAILED DESCRIPTION

Technology is described hereinafter with reference to the figures, in which aspects exemplary embodiments are shown. The claimed invention may, however, be embodied in different forms and should not be construed as being limited to the embodiments set forth herein. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment aspect is not necessarily limited to that embodiment aspect and can be practiced in any other embodiments aspects even if not so illustrated, or if not so explicitly described. The features, functions, and advantages may be achieved independently in various embodiments manners or may be combined in yet other embodiments.

Before describing exemplary embodiments aspects illustratively depicted in the several figures, a general introduction is provided to further understanding. One of the key challenges in electric vehicle (EV) charging is to distribute the available power between outlets (charging terminals) on site.

One conventional solution is an all-in-one charger in which power electronics are inside a user unit. Each conventional all-in-one charger receives input power from an individually assigned power unit. The input power is typically AC input power. The all-in-one charger converts the input power into desired DC power via the inbuilt power electronics, and supplies the converted DC power to the charging terminal.

Another conventional solution is a split-system-type charger in which one centralized power unit feeds multiple user units and power is allocated through a switch matrix inside the power unit. The switch matrix inside the power unit is relatively complex. There is a need for cabling between the centralized power unit and each user unit. This cabling needs to be rated for the full load current. The system cannot deliver this current on all outputs simultaneously.

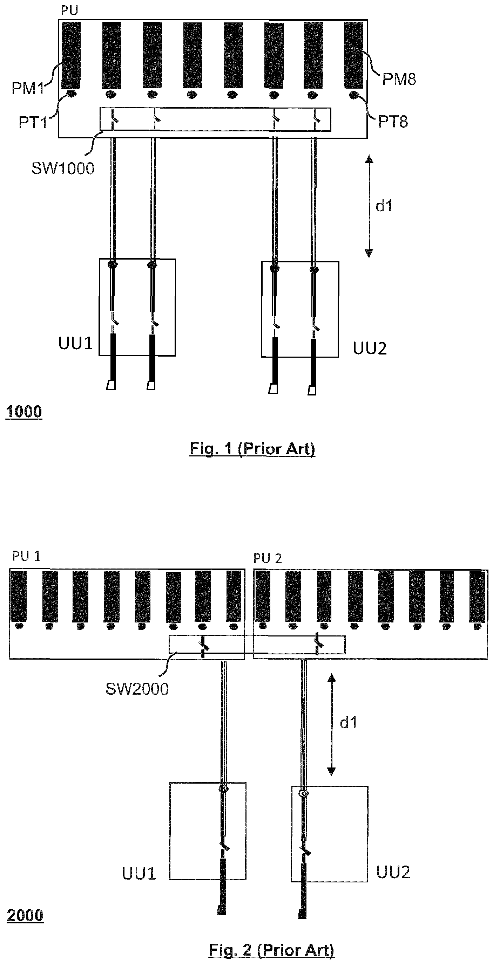

As an example, Fig. 1 shows a conventional charging system 1000 including a power unit PU, a first user unit UU1, and a second user unit UU2. Power unit PU includes power modules PM1 through PM8. Each power module PM1...PM8 is assigned to a corresponding power terminal PT1...PT8. For example, each power module PM1...PM8 has a rated power of 100 kW. A 4×4 switch matrix SW1000 selectively bridges some of the power terminals PT1...PT8 of power unit PU. User unit UU1 is connected, via a 600 Ampere (A) bus, to switch matrix SW1000. User unit UU1 is further connected, via another 600 A bus, to switch matrix SW1000. User unit UU2 is connected, via a 600 Ampere (A) bus, to switch matrix SW1000. User unit UU2 is further connected, via another 600 A bus, to switch matrix SW1000. The buses are rated for the full load current. For example, the 600 A buses each have a wire gauge of 240 mm² for an exemplary distance d1=50 m between power unit PU and each user unit UU1, UU2. Thus, at least 800 meters of wiring at 240 mm² gauge are needed: 50 m ×2 (per pole) ×2 (for DC+ and DC-) ×4 (outlets).

As another example, Fig. 2 shows another conventional charging system 2000 including a first power unit PU1, a second power unit PU2, a first user unit UU1, and a second user unit UU2. Power unit PU1 includes power modules PM1 through PM8. Each power module PM1...PM8 is assigned to a corresponding power terminal PT1...PT8. For example, each power module PM1...PM8 has a rated power of 100 kW. Power unit PU2 includes power modules PM1 through PM8. Each power module PM1...PM8 is assigned to a corresponding power terminal PT1...PT8. For example, each power module PM1...PM8 has a rated power of 100 kW. A 2×2 switch matrix SW2000 selectively bridges some of the power terminals PT1...PT8 of power unit PU1 and some of the power terminals PT1...PT8 of power unit PU2. User unit UU1 is connected, via a 1500 Ampere (A) bus, to switch matrix S2000. User unit UU2 is connected, via a 1500 Ampere (A) bus, to switch matrix S2000. For example, the 1500 A buses each have a wire gauge of 300 mm² for an exemplary distance d1=50 m between each power unit PU1, PU2 and each user unit UU1, UU2. Thus, at least 800 m of wiring at 300 mm² are needed: 50 m ×4 (per pole) ×2 (for DC+ and DC-) ×2 (outlets).

With the above general understanding borne in mind, embodiments for charging distribution units and charging systems using those units are described below.

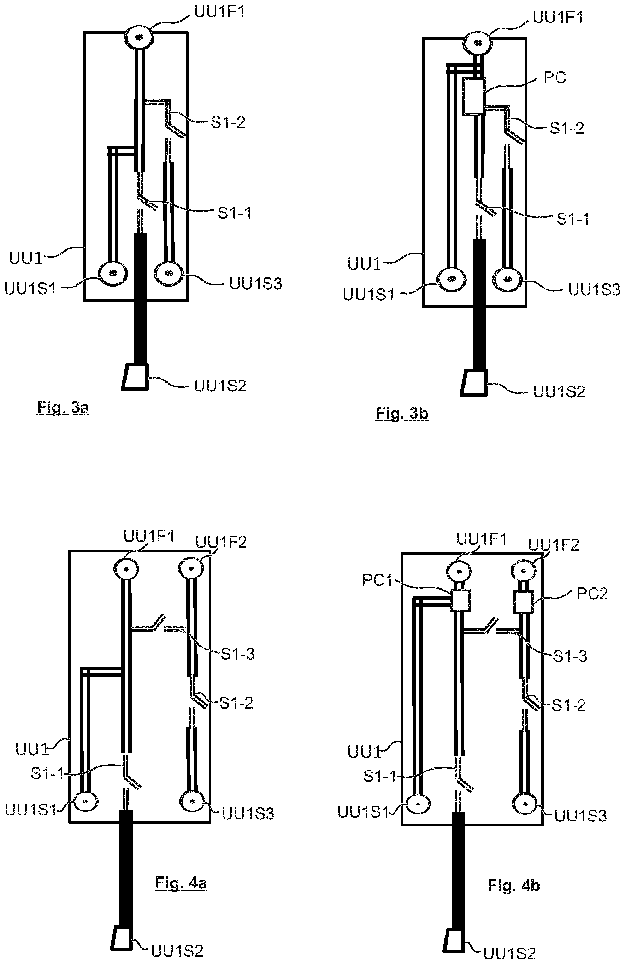

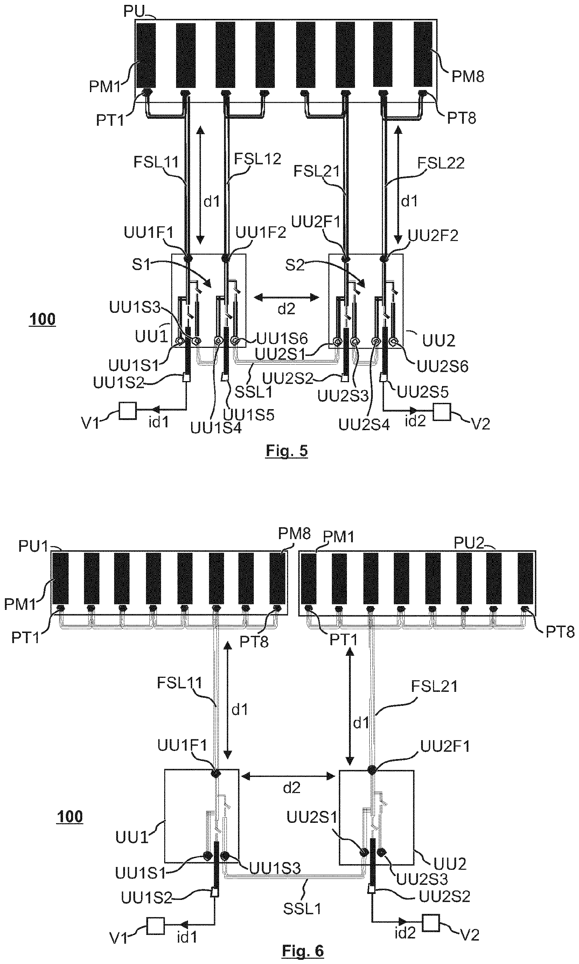

Fig. 3a shows a schematic configuration of a DC charging distribution unit UU1 according to an embodiment. A terminal UU1F1 on a first side, or primary side, of the distribution unit UU1 is configured for receiving a first input current from a power unit (shown e.g. in Fig. 5). The terminal UU1F1 is also referred to as first primary-side terminal. A terminal UU1S2 on a second side, or secondary side, of the distribution unit UU1 is configured to be connectible to a vehicle (not shown in Fig. 3a) for providing a vehicle charging current. The terminal UU1S2 is also referred to as secondary-side DC vehicle connection terminal. A terminal UU1S3 on the secondary side is configured to be connectible to another DC charging distribution unit (not shown in Fig. 3a) for providing a sharing current to the other DC charging distribution unit. The terminal UU1S3 is also referred to as first secondary-side power sharing terminal.

The distribution unit UU1 in Fig. 3a includes a current distributor S1-1, S1-2. The current distributor S1-1, S1-2 is operable to select between a vehicle-charging configuration and a power-sharing configuration. In the vehicle-charging configuration of the current distributor S1-1, S1-2, the first input current received on the first primary-side terminal UU1F1 is used to feed the secondary-side DC vehicle connection terminal UU1S2 with the vehicle charging current. It is noted that feeding the secondary-side DC vehicle connection terminal UU1S2 is not limited to the vehicle charging current and may optionally include other currents. In the power-sharing configuration of the current distributor S1-1, S1-2, the first input current received on the first primary-side terminal UU1F1 is used to feed the first secondary-side power sharing terminal UU1S3 with the sharing current.

In the example of Fig. 3a, the distribution unit UU1 is specifically configured to receive a DC current - as the first input current - on the first primary-side terminal UU1F1. According to such a configuration, the current distributor includes a first switch S1-1 and a second switch S1-2. The switches S1-1, S1-2 may collectively be referred to as a switch assembly. The vehicle-charging configuration in the example of Fig. 3a is a vehicle-charging switch configuration in which the first primary-side terminal UU1F1 is connected to the secondary-side DC vehicle connection terminal UU1S2. Furthermore, the power-sharing configuration in the example of Fig. 3a is a power-sharing switch configuration in which the first primary-side terminal UU1F1 is connected to the first secondary-side power sharing terminal UU1S3.

It is noted that in the example of Fig. 3a, the vehicle-charging switch configuration may be active without the power-sharing switch configuration being active; or that the power-sharing switch configuration may be active without the vehicle-charging switch configuration being active; or that both the vehicle-charging switch configuration and the power-sharing switch configuration are active at the same time.

In case the vehicle-charging switch configuration is active without the power-sharing switch configuration being active, the vehicle charging current is the first input current. In other words: The secondary-side DC vehicle connection terminal UU1S2 is directly fed, via the first switch S1-1 of the switch assembly, with the first input current as the vehicle charging current.

In case the power-sharing switch configuration is active without the vehicle-charging switch configuration being active, the sharing current is the first input current. In other words: The first secondary-side power sharing terminal UU1S3 is directly fed, via the second switch S1-2 of the switch assembly, with the first input current as the sharing current.

In case both the vehicle-charging switch configuration and the power-sharing switch configuration are active at the same time, the first input current is distributed, via the first switch S1-1 and the second switch S1-2, to both the secondary-side DC vehicle connection terminal UU1S2 and the first secondary-side power sharing terminal UU1S3.

The exemplary distribution unit UU1 in Fig. 3a further includes a second secondary-side power sharing terminal UU1S1. Note that the second secondary-side power sharing terminal UU1S1 is optional, and the distribution unit UU1 may not necessarily be equipped with the second secondary-side power sharing terminal UU1S1. When the second secondary-side power sharing terminal UU1S1 is present, the second secondary-side power sharing terminal UU1S1 is connected, optionally internally connected, to the first primary-side terminal UU1F1. The second secondary-side power sharing terminal UU1S1 is connectible to yet another DC charging distribution unit (not shown in Fig. 3a). When connected to the yet another DC charging distribution unit, the distribution unit UU1 obtains, via the second secondary-side power sharing terminal UU1S1, input power from the yet another DC charging distribution unit.

In an example, multiple distribution units UU1 as shown in Fig. 3a may be cascaded in a way that the first secondary-side power sharing terminal UU1S3 of a present distribution unit UU1 is connected to the second secondary-side power sharing terminal UU1S1 of a subsequent distribution unit UU1. That is, the distribution units UU1 may be part of a modular configuration.

Fig. 3b shows a schematic configuration of a DC charging distribution unit UU1 according to an embodiment. A terminal UU1F1 on a first side, or primary side, of the distribution unit UU1 is configured for receiving a first input current from a power unit (shown e.g. in Fig. 5). The terminal UU1F1 is also referred to as first primary-side terminal. A terminal UU1S2 on a second side, or secondary side, of the distribution unit UU1 is configured to be connectible to a vehicle (not shown in Fig. 3b) for providing a vehicle charging current. The terminal UU1S2 is also referred to as secondary-side DC vehicle connection terminal. A terminal UU1S3 on the secondary side is configured to be connectible to another DC charging distribution unit (not shown in Fig. 3b) for providing a sharing current to the other DC charging distribution unit. The terminal UU1S3 is also referred to as first secondary-side power sharing terminal.

The distribution unit UU1 in Fig. 3b includes components collectively referred to as a current distributor PC1, S1-1, S1-2. A power converter PC is connected, on a primary side thereof, to the first primary-side terminal UU1F1. The power converter PC is connected, on a secondary side thereof, to a first switch S1-1 leading to the secondary-side DC vehicle connection terminal UU1S2, and to a second switch S1-2 leading to the first secondary-side power sharing terminal UU1S3. The current distributor PC, S1-1, S1-2 is operable to select between a vehicle-charging configuration and a power-sharing configuration. In the vehicle-charging configuration of the current distributor PC, S1-1, S1-2, the first input current received on the first primary-side terminal UU1F1 is used to feed the secondary-side DC vehicle connection terminal UU1S2 with the vehicle charging current. That is, the first input current is converted, via the power converter PC, to the vehicle charging current, and the converted current is routed, via the first switch S1-1, to the secondary-side DC vehicle connection terminal UU1S2. It is noted that feeding the secondary-side DC vehicle connection terminal UU1S2 is not limited to the vehicle charging current and may optionally include other currents. In the power-sharing configuration of the current distributor PC, S1-1, S1-2, the first input current received on the first primary-side terminal UU1F1 is used to feed the first secondary-side power sharing terminal UU1S3 with the sharing current. That is, the first input current is converted, via the power converter PC, to the sharing current, and the converted current is routed, via the second switch S1-2, to the first secondary-side power sharing terminal UU1S3. Typically, the power converter PC outputs, on its secondary side, a DC current as the vehicle charging current and a DC current as the sharing current.

In the example of Fig. 3b, the distribution unit UU1 is specifically configured to receive an AC current - as the first input current - on the first primary-side terminal UU1F1. According to such a configuration, the current distributor includes the power converter, a first switch S1-1 and a second switch S1-2. The switches S1-1, S1-2 may collectively be referred to as a switch assembly. The vehicle-charging configuration in the example of Fig. 3b is a configuration in which the first primary-side terminal UU1F1 is connected, via the power converter PC, to the secondary-side DC vehicle connection terminal UU1S2. Furthermore, the power-sharing configuration in the example of Fig. 3b is a configuration in which the first primary-side terminal UU1F1 is connected, via the power converter PC, to the first secondary-side power sharing terminal UU1S3.

It is noted that in the example of Fig. 3b, the vehicle-charging configuration may be active without the power-sharing configuration being active; or that the power-sharing configuration may be active without the vehicle-charging configuration being active; or that both the vehicle-charging configuration and the power-sharing configuration are active at the same time.

The exemplary distribution unit UU1 in Fig. 3b further includes a second secondary-side power sharing terminal UU1S1. Note that the second secondary-side power sharing terminal UU1S1 is optional, and the distribution unit UU1 may not necessarily be equipped with the second secondary-side power sharing terminal UU1S1. When the second secondary-side power sharing terminal UU1S1 is present, the second secondary-side power sharing terminal UU1S1 is connected, optionally internally connected, to the first primary-side terminal UU1F1. A current received on the second secondary-side power sharing terminal UU1S1 is thus input to the primary side of the power converter PC. The second secondary-side power sharing terminal UU1S 1 is connectible to yet another DC charging distribution unit (not shown in Fig. 3b). When connected to the yet another DC charging distribution unit, the distribution unit UU1 obtains, via the second secondary-side power sharing terminal UU1S1, input power from the yet another DC charging distribution unit. For example, this input power from the yet another DC charging distribution unit is AC input power.

It is noted, however, that a configuration may be employed in which the second secondary-side power sharing terminal UU1S1 is connected, optionally internally connected, to the secondary side of the power converter PC. This configuration may be beneficial in a case in which the input power from the yet another DC charging distribution unit is DC input power.

In an example, multiple distribution units UU1 as shown in Fig. 3b may be cascaded in a way that the first secondary-side power sharing terminal UU1S3 of a present distribution unit UU1 is connected to the second secondary-side power sharing terminal UU1S1 of a subsequent distribution unit UU1. That is, the distribution units UU1 may be part of a modular configuration.

Fig. 4a shows a distribution unit UU1 according to an embodiment. The distribution unit UU1 has a configuration similar to that of Fig. 3a. In the distribution unit UU1 of Fig. 4a, a second primary-side terminal UU1F2 for receiving a second input current from a power unit is present. For example, the power unit providing the second input current is different from the power unit providing the first input current. A current distributor S1-1, S1-2, S1-3 of the distribution unit UU1 in Fig. 4a is configured in a similar way as the current distributor S1-1, S1-2 of the distribution unit UU1 in Fig. 3a. That is, the current distributor S1-1, S1-2, S1-3 of the distribution unit UU1 in Fig. 4a is operable to select between the vehicle-charging configuration and the power sharing-configuration, as described in connection with Fig. 3a. In addition, the current distributor S1-1, S1-2, S1-3 of the distribution unit UU1 in Fig. 4a is further operable to select between a combined input configuration and an individual input configuration.

In the combined input configuration, the first and second primary-side terminals are combined. Typically, the combined input configuration is available for both the vehicle-charging configuration and the power-sharing configuration. In the example of Fig. 4a, the combined input configuration can be achieved by closing a third switch S1-3 of the current distributor to bridge the first and second primary-side terminals UU1F1, UU1F2.

In the individual input configuration, the first and second primary-side terminals UU1F1, UU1F2 are disconnected from each other. Typically, the individual-input configuration is available for the vehicle-charging configuration, in which the first primary-side terminal UU1F1 but not the second primary-side terminal UU1F2 is connected to the secondary-side DC vehicle connection terminal UU1S2. Additionally or alternatively, the individual-input configuration may be available for an individual-power-sharing configuration in which the second primary-side terminal UU1F2 but not the first primary-side terminal UU1F1 is connected to the first secondary-side power sharing terminal.

Fig. 4b shows a distribution unit UU1 according to an embodiment. The distribution unit UU1 has a configuration similar to that of Fig. 3b. In the distribution unit UU1 of Fig. 4a, a second primary-side terminal UU1F2 for receiving a second input current from a power unit is present. For example, the power unit providing the second input current is different from the power unit providing the first input current. The distribution unit UU1 in Fig. 4b includes components collectively referred to as a current distributor PC1, PC2, S1-1, S1-2, S1-3. The current distributor PC1, PC2, S1-1, S1-2, S1-3 of the distribution unit UU1 in Fig. 4b is configured in a similar way as the current distributor PC, S1-1, S1-2 of the distribution unit UU1 in Fig. 3b. That is, the current distributor PC1, PC2, S1-1, S1-2, S1-3 of the distribution unit UU1 in Fig. 4b is operable to select between the vehicle-charging configuration and the power sharing-configuration, as described in connection with Fig. 3b. In addition, the current distributor PC1, PC2, S1-1, S1-2, S1-3 of the distribution unit UU1 in Fig. 4a is further operable to select between a combined input configuration and an individual input configuration.

A first power converter PC1 is connected, on a primary side thereof, to the first primary-side terminal UU1F1 and to the second secondary-side power sharing terminal UU1S1. The first power converter PC1 is connected, on a secondary side thereof, to the first switch S1-1 leading to the secondary-side DC vehicle connection terminal UU1S2, and to a third switch S1-3 leading to a secondary side of a second power converter PC2. The primary side of the second power converter PC2 is connected to the second primary-side input terminal UU1F2. The current distributor PC1, PC2, S1-1, S1-2, S1-3 is operable to select between a vehicle-charging configuration and a power-sharing configuration. In the vehicle-charging configuration of the current distributor PC, S1-1, S1-2, one or more of the first input current received on the first primary-side terminal UU1F1 and the input current received on the second secondary-side power sharing terminal UU1S1 are used to feed the secondary-side DC vehicle connection terminal UU1S2 with the vehicle charging current.

That is, the input current(s) is/are converted, via the power converter PC1, to the vehicle charging current, and the converted current is routed, via the first switch S1-1, to the secondary-side DC vehicle connection terminal UU1S2. It is noted that feeding the secondary-side DC vehicle connection terminal UU1S2 is not limited to the vehicle charging current and may optionally include other currents. In the power-sharing configuration of the current distributor PC1, PC2, S1-1, S1-2, S1-3, the first input current received on the first primary-side terminal UU1F1 is used to feed the first secondary-side power sharing terminal UU1S3 with the sharing current. That is, the first input current is converted, via the power converter PC1, to the sharing current, and the converted current is routed, via the third switch S1-3 and the second switch S1-2, to the first secondary-side power sharing terminal UU1S3. Typically, the power converter PC1 outputs, on its secondary side, a DC current as the vehicle charging current and a DC current as the sharing current. Additionally or alternatively, the second power converter PC2 converts a second input current received at the second primary-side terminal UU1F2 and outputs, on its secondary side, a DC current as the vehicle charging current and a DC current as the sharing current. By operating the switches S1-1, S1-2, S1-3, a suitable switch configuration for operating the

In the example of Fig. 4b, the distribution unit UU1 is specifically configured to receive an AC current - as the first input current and/or the second input current - on the first and/or second primary-side terminals UU1F1, UU1F2. According to such a configuration, the current distributor includes the power converters PC1, PC2, the first switch S1-1, the second switch S1-2, and the third switch S1-3. The switches S1-1, S1-2, S1-3 may collectively be referred to as a switch assembly.

In the combined input configuration, the currents from the first and second primary-side terminals are individually converted by the power converters PC1, PC2, and their respective outputs are then combined. Typically, the combined input configuration is available for both the vehicle-charging configuration and the power-sharing configuration. In the example of Fig. 4b, the combined input configuration can be achieved by closing a third switch S1-3 of the current distributor to bridge the secondary sides of first and second power converters PC1, PC2

In the individual input configuration, the first and second primary-side terminals UU1F1, UU1F2 are disconnected from each other. Typically, the individual-input configuration is available for the vehicle-charging configuration, in which the converted current from the first primary-side terminal UU1F1 but not the second primary-side terminal UU1F2 is routed to the secondary-side DC vehicle connection terminal UU1S2. Additionally or alternatively, the individual-input configuration may be available for an individual-power-sharing configuration in which the converted current from the second primary-side terminal UU1F2 but not the first primary-side terminal UU1F1 is routed to the first secondary-side power sharing terminal.

Fig. 5 shows an exemplary DC charging system 100 according to an embodiment. The system includes a power unit PU. The power unit includes power modules PM1...PM8. For example, and without limitation, each power module PM1...PM8 has a rated output of 100 kW DC. The output of each power module PM1...PM8 is directly accessible via a corresponding output terminal PT1...PT8. In the example, and without limitation, each neighboring two output terminals are bridged for higher output. That is, PT1 is bridged to PT2, PT3 is bridged to PT4 and so on.

The system 100 further includes a first DC charging distribution unit UU1 and a second DC charging distribution unit UU2. Distribution unit UU1 is configured like a cascade of two distribution units shown and described in Fig. 3a, thus achieving a configuration similar to that of Fig. 4a. That is, in distribution unit UU1, secondary-side terminal UU1S3 and secondary-side terminal UU1S4 are bridged. Note that the physical distance between secondary-side terminal UU1S3 and secondary-side terminal UU1S4 is very short. Distribution unit UU2 is configured like a cascade of two distribution units shown and described in Fig. 3a, thus achieving a configuration similar to that of Fig. 4a. That is, in distribution unit UU2, secondary-side terminal UU2S3 and secondary-side terminal UU2S4 are bridged. Note that the physical distance between secondary-side terminal UU2S3 and secondary-side terminal UU2S4 is very short.

Distribution unit UU1 is connected, at its first primary-side terminal UU1F1 and via a primary-side link FSL11, to the bridged output terminals PT1, PT2. Distribution unit UU1 is connected, at its second primary-side terminal UU1F2 and via another primary-side link FSL12, to the bridged output terminals PT3, PT4. Distribution unit UU2 is connected, at its first primary-side terminal UU2F1 and via another primary-side link FSL21, to the bridged output terminals PT5, PT6. Distribution unit UU2 is connected, at its second primary-side terminal UU2F2 and via another primary-side link FSL22, to the bridged output terminals PT7, PT8. The physical distance between the power unit PU and each distribution unit UU1, UU2 is denoted with d1. Note that the distance d1 between the power unit PU and each distribution unit UU1, UU2 need not necessarily be exactly the same, but the distances d1 are typically within a similar range.

Distribution unit UU1 is connected, at its secondary-side power sharing terminal UU1S6 and via a secondary-side link SSL1, to secondary-side power sharing terminal UU2S1 of distribution unit UU2. The physical distance between the distribution units UU1, UU2 is denoted with d2. d2 is typically much larger than the physical distance between secondary-side terminal UU1S3 and secondary-side terminal UU1S4 or the physical distance between secondary-side terminal UU2S3 and secondary-side terminal UU2S4, and shorter than the distance d1. As a non-limiting example, d1 is e.g. 50 m, and d2 is e.g. 3 m.

A vehicle V1 is connected to secondary-side vehicle charging terminal UU1S2. Similarly, a vehicle V2 is connected to secondary-side vehicle charging terminal UU2S5. Vehicle V1 receives charging current id1 from distribution unit UU1. Vehicle V2 receives charging current id2 from distribution unit UU2. Charging, as used herein, is understood as an illustrative rather than a restrictive term. Charging may include a flow of power (a current flow) in a direction from the distribution units UU1, UU2 towards vehicles V1, V2, and/or a direction from the vehicles V1, V2 towards the distribution units UU1, UU2. Moreover, charging may also include a supply of electrical power to vehicle V1, V2 that is used for purposes other than raising the state of charge (SoC) of the vehicle's batteries, e.g. power consumed by on-board equipment. Furthermore, charging may include a supply of electrical power to vehicle V1, V2 that is only indirectly used for raising the SoC of the batteries, e.g. through intermediation of an on-board (a vehicle-bound or vehicle-internal) power distributor.

The use case of the example of Fig. 5 according to an embodiment of the present specification is comparable to the use case of the conventional example described above in connection with Fig. 1. In the example of Fig. 5, the very short bridges between every two of the terminals PT1...PT8 of the power unit, between secondary-side power sharing terminals UU1S3 and UU1S4 of distribution unit UU1, and between secondary-side power sharing terminals UU2S3 and UU2S4 of distribution unit UU2 are each rated for maximum power, but - due to their relative shortness - only contribute marginally to the overall system complexity and costs. In an example, the maximum power corresponds to a current of 1000 A. The primary-side links FSL11, FSL12, FSL21, FSL22 are e.g. each rated at 500 A. The secondary-side link SSL1 is rated at 250 A, and may contribute to a power sharing between distribution unit UU1 and distribution unit UU2. For example, the 500 A buses each have a wire gauge of 185 mm² for an exemplary distance d1=50 m between power unit PU and each user unit UU1, UU2. Thus, at least 800 meters of wiring at 185 mm² gauge are needed: 50 m ×2 (per pole) ×2 (for DC+ and DC-) ×4 (outlets). Additional 250 A wiring is needed for secondary-side link SSL1, but since distance d2 is considerably shorter than dl, the contribution to the overall complexity and wiring costs of secondary-side link SSL1 is low. Thus, a configuration like the one shown in the exemplary embodiment of Fig. 5 may help save costs and reduce complexity compared to the conventional configuration shown in Fig. 1.

Fig. 6 shows an exemplary DC charging system 100 according to an embodiment. The system includes a first power unit PU1 and a second power unit PU2. Each power unit PU1, PU2 includes power modules PM1...PM8. For example, and without limitation, each power module PM1...PM8 has a rated output of 100 kW DC. The output of each power module PM1...PM8 is directly accessible via a corresponding output terminal PT1...PT8. In the example, and without limitation, the output terminals of the power unit PU1 are bridged for higher output. Likewise, without limitation, the output terminals of the power unit PU2 are bridged for higher output.

The system 100 further includes a first DC charging distribution unit UU1 and a second DC charging distribution unit UU2. Distribution unit UU1 is configured like the distribution unit shown and described in Fig. 3a. Distribution unit UU2 is configured like the distribution unit shown and described in Fig. 3a.

Distribution unit UU1 is connected, at its first primary-side terminal UU1F1 and via a primary-side link FSL11, to the bridged output terminals PT1...PT8 of power unit PU1. Distribution unit UU2 is connected, at its first primary-side terminal UU2F1 and via another primary-side link FSL12, , to the bridged output terminals PT1...PT8 of power unit PU2. The physical distance between the power unit PU1 and the distribution unit UU1, and the physical distance between the power unit PU2 and the distribution unit UU2 are each denoted with d1. Note that the distance d1 between the power units PU1, PU2 and the corresponding distribution unit UU1, UU2 need not necessarily be exactly the same, but the distances d1 are typically within a similar range.

Distribution unit UU1 is connected, at its secondary-side power sharing terminal UU1S3 and via a secondary-side link SSL1, to secondary-side power sharing terminal UU2S1 of distribution unit UU2. The physical distance between the distribution units UU1, UU2 is denoted with d2. d2 is typically much larger than the physical distance between secondary-side terminal UU1S3 and secondary-side terminal UU1S4 or the physical distance between secondary-side terminal UU2S3 and secondary-side terminal UU2S4, and shorter than the distance d1. As a non-limiting example, d1 is e.g. 50 m, and d2 is e.g. 3 m.

A vehicle V1 is connected to secondary-side vehicle charging terminal UU1S2 of the distribution unit UU1. Similarly, a vehicle V2 is connected to secondary-side vehicle charging terminal UU2S2 of the distribution unit UU2. Vehicle V1 receives charging current id1 from distribution unit UU1. Vehicle V2 receives charging current id2 from distribution unit UU2. Charging, as used herein, is understood as an illustrative rather than a restrictive term. Charging may include a flow of power (a current flow) in a direction from the distribution units UU1, UU2 towards vehicles V1, V2, and/or a direction from the vehicles V1, V2 towards the distribution units UU1, UU2. Moreover, charging may also include a supply of electrical power to vehicle V1, V2 that is used for purposes other than raising the state of charge (SoC) of the vehicle's batteries, e.g. power consumed by on-board equipment. Furthermore, charging may include a supply of electrical power to vehicle V1, V2 that is only indirectly used for raising the SoC of the batteries, e.g. through intermediation of an on-board (a vehicle-bound or vehicle-internal) power distributor.

The use case of the example of Fig. 6 according to an embodiment of the present specification is comparable to the use case of the conventional example described above in connection with Fig. 2. In the example of Fig. 6, the very short bridges between the terminals PT1...PT8 of the power unit PU1 and between the terminals PT1...PT8 of the power unit PU2 are each rated for maximum power, but - due to their relative shortness - only contribute marginally to the overall system complexity and costs. In an example, the maximum power corresponds to a current of 1000 A. The primary-side links FSL11, FSL12 are e.g. each rated at 1000 A. The secondary-side link SSL1 is rated at 250 A, and may contribute to a power sharing between distribution unit UU1 and distribution unit UU2. For example, the 1000 A buses each have a wire gauge of 240 mm² for an exemplary distance d1=50 m between power unit PU and each user unit UU1, UU2. Thus, at least 600 meters of wiring at 240 mm² gauge are needed: 50 m ×3 (per pole) ×2 (for DC+ and DC-) ×2 (outlets). Additional 250 A wiring is needed for secondary-side link SSL1, but since distance d2 is considerably shorter than dl, the contribution to the overall complexity and wiring costs of secondary-side link SSL1 is low. Thus, a configuration like the one shown in the exemplary embodiment of Fig. 6 may help save costs and reduce complexity compared to the conventional configuration shown in Fig. 1.

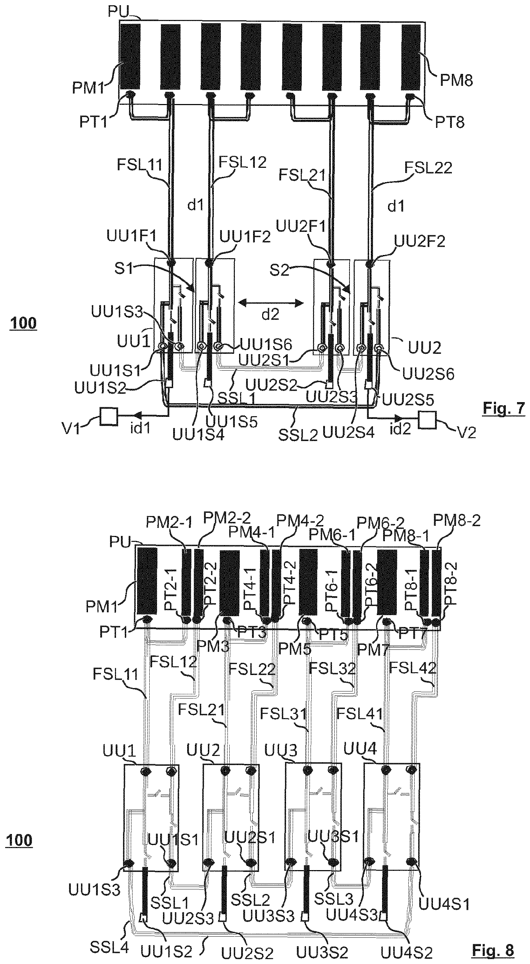

Fig. 7 shows a variant of the configuration of the DC charging system 100 of the embodiment shown in Fig. 5. Here, only the differences are explained. In addition to the first secondary-side link SSL1 of the configuration in Fig. 5, the system 100 includes a second secondary-side link SSL2 that connects the first secondary-side power sharing terminal UU2S6 of the second distribution unit UU2 with the second secondary-side power sharing terminal UU1S2 of the first distribution unit UU1. This allows for an improved exchange of power between the distribution units UU1, UU2, e.g. on a per-need basis, while keeping the wiring of the primary-side links FSL11, FSL12, FSL 21, FSL22 on a low-complexity level.

Fig. 8 shows another variant of the configuration of the DC charging system 100 of the embodiment shown in Fig. 5. Here, only the differences are explained. The power unit PU in Fig. 8 includes 100 kW power modules PM1, PM3, PM5, PM7, and it includes 50 kW power modules PM2-1, PM2-2, PM4-1, PM4-2, PM6-1, PM6-2, PM8-1, PM8-2. Power module PM1 is bridged, on its secondary side on power terminal PT1, with power module PM2-1 on power terminal PT2-1. Power module PM3 is bridged, on its secondary side on power terminal PT3, with power module PM4-1 on power terminal PT4-1. Power module PM5 is bridged, on its secondary side on power terminal PT5, with power module PM6-1 on power terminal PT6-1. Power module PM7 is bridged, on its secondary side on power terminal PT7, with power module PM8-1 on power terminal PT8-1.

User unit UU1 is connected, via a primary-side link FSL11, to power modules PM1 and PM2-1. User unit UU1 is connected, via a primary-side link FSL12, to power module PM2-2. User unit UU2 is connected, via a primary-side link FSL21, to power modules PM3 and PM4-1. User unit UU2 is connected, via a primary-side link FSL22, to power module PM4-2. User unit UU3 is connected, via a primary-side link FSL31, to power modules PM5 and PM6-1. User unit UU3 is connected, via a primary-side link FSL32, to power module PM6-2. User unit UU4 is connected, via a primary-side link FSL41, to power modules PM7 and PM8-1. User unit UU4 is connected, via a primary-side link FSL42, to power module PM8-2.

User unit UU1 is connected, via a secondary-side link SSL1, to user unit UU2. User unit UU2 is connected, via a secondary-side link SSL2, to user unit UU3. User unit UU3 is connected, via a secondary-side link SSL3, to user unit UU4. User unit UU4 is connected, via a secondary-side link SSL4, to user unit UU1.

The configuration of the system 100 as shown in Fig. 8 may help to increase the granularity and/or the scalability thereof.

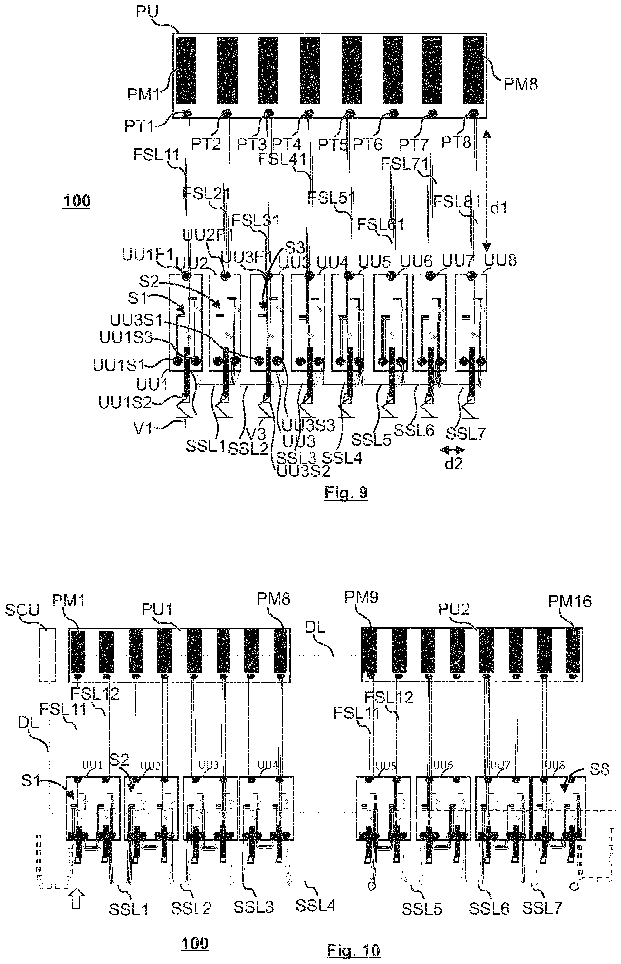

Fig. 9 shows a configuration of a DC charging system 100 according to an embodiment. For a better overview and readability, only some of the reference numbers are repeated for each and every element. In Fig. 9, a power unit PU feeds, via respective primary-side links FSL11...FSL81, distribution units UU1...UU8. On their secondary-sides, the user units UU1...UU8 are connected in parallel via secondary-side links SSL1...SSL7; that is, their respective first secondary-side terminals UU1S3...UU8S3 are bridged. Each secondary-side link SSL1...SSL7 typically has a higher rated power than each primary-side link FSL11...FSL81. As a non-limiting example, each secondary-side link SSL1...SSL7 is a bus rated for 1000 A, while each primary-side link FSL11...FSL81 is a bus rated for 250 A. The physical distance d1 between the power unit PU and each of the distribution units UU1...UU8 is larger than the physical distance d2 between neighboring ones of the distribution units UU1...UU8. That is, no 1000 A-rated wiring is needed on the long run, i.e. the long distance d1, but only comparatively small 250 A-rated wirings.

In an example, the respective secondary-side DC vehicle connection terminals UU1S2...UU8S2 are embodied as overhead connection lines (OCL). A vehicle V1, V3 may be connected, e.g. via pantographs and the OCLs, to secondary-side DC connection terminal UU1S2...UU8S2. In the example shown in Fig. 9, a vehicle V1 is connected to secondary-side DC connection terminal UU1S2, and a vehicle V3 is connected to secondary-side DC connection terminal UU3S2. Note that this is only a non-limiting example, and up to 8 vehicles may be connected. For example, vehicle V1 and vehicle V3 each make use of 100 kW to charge their batteries. This example may be considered an "overnight" configuration, e.g. in a vehicle depot, in which multiple vehicles charge their batteries at the same time. At least one of the secondary-side DC vehicle connection terminals UU1S2...UU8S2 (one of the OCLs) may be designated as a "fast lane", e.g. for quick recharging during the daytime. As a non-limiting example, during quick recharging, the respective vehicle may draw up to four times the overnight charging power, e.g. up to 400 kW at 1000 A. This may be achieved without any 1000 A wiring of the distribution units on the primary side due to the exchange of power via the secondary-side power sharing links.

Fig. 10 shows a configuration of a DC charging system 100 according to an embodiment. For a better overview and readability, only some of the reference numbers are repeated for each and every element. Distribution units UU1...UU4 are connected, via primary-side links FSL11, FSL12..., to power unit PU1. Distribution units UU5... UU8 are connected, via primary-side links FSL51, FSL52..., to power unit PU1. User units UU1...UU8 are interconnected with each other on their secondary sides via secondary-side links SSL1...SSL7. For example, power modules PM1...PM8 of power unit PU 1 and power modules PM9...PM16 of power unit PU2 are each rated for a power of 100 kW. As a non-limiting example, each primary-side link is rated for 250 A, and each secondary-side link is rated for 1500 A.

A site control unit SCU, simply referred to as control unit in the following, is directly or indirectly connected, via data lines DL, to each of the power units PU1, PU2 and the distribution units UU1...UU8. Each distribution unit UU1...UU8 includes a switch assembly S1...S8 functioning as a current distributor.

The control unit SCU is configured to determine short-circuit-safe positions of the switch assemblies and control each of the switch assemblies to be only in any of the determined short-circuit-safe positions.

Moreover, the control unit SCU determines a request value of a vehicle charging current requested at any of the secondary-side DC vehicle connection terminal of any of the distribution units UU1...UU8. As a non-limiting example, the first distribution unit UU1 is assumed as being requested for outputting a vehicle charging current at the request value. The control unit SCU determines a current-carrying capacity of the primary-side link or links of the first distribution unit UU1. The control unit SCU determines a current-carrying capacity of the secondary-side DC link between the first distribution unit UU1 and the second distribution unit UU2. The control unit SCU controls each of the current distributors (switch assemblies) S1...S8 such that the sum of the current-carrying capacities matches or exceeds the request value.

This approach may be extended by the control unit to the remaining distribution units and their respective primary-side and secondary-side links. For example, the control unit SCU may adapt the current available at each secondary-side DC vehicle connection terminal (and thereby the power available at that terminal) on a per-need basis by controlling the current distributors S1...S8 accordingly.

For example, when the request value is 100 kW in the example above, the control unit SCU may control the current distributors in each distribution unit such that the power is available at each secondary-side DC vehicle connection terminal. Furthermore, when the request value is e.g. 200 kW, the control unit SCU may control the current distributors in each distribution unit such that the requested power of 200 kW is available at the corresponding secondary-side DC vehicle connection terminal, control one other of the corresponding secondary-side DC vehicle connection terminal to be unavailable (OFF), and control the remaining ones to be available at 100 kW. This may be extended, in the example shown, to up to 500 kW at one secondary-side DC vehicle connection terminal while all the remaining ones are controlled to be unavailable (OFF). Thereby, a granularity (in the non-limiting example, a 100 kW granularity) can be achieved among the secondary-side DC vehicle connection terminals, while in an extreme case, a maximum power (in the non-limiting example, 500 kW) is possible at one secondary-side DC vehicle connection terminal.

It is noted that the embodiments described herein can be freely combined and/or certain features may be omitted, as appropriate. For example, the grouping/jumpering of the power modules at the power terminals may be performed arbitrarily according to the site configuration and/or the use case. Non-limiting examples include groups of two, groups of four, or any other grouping. As a further example, the cascading of the distribution units (jumpers/bridges at the secondary-side power sharing terminals) may be performed arbitrarily according to the site configuration and/or the use case. This allows for a high modularity at interconnection points and a high configurability by applying/changing the jumpers/bridges as appropriate.

With the configurations as described herein, power may be flexibly exchanged between distribution units. For example, a distribution unit may be connected to a power unit via a primary-side link having a specific current carrying capacity, and the rated power that can be delivered from the power unit, via this primary-side link, is specified by this current carrying capacity (and the link voltage). With the technology as described herein, this installed power for this distribution unit may be exceeded by "borrowing" power from neighboring distribution unit(s) via the secondary-side link(s), while the costs arising from the wire gauge of the primary-side link(s) can be kept low.

Although particular embodiments have been shown and described, it will be understood that it is not intended to limit the claimed inventions to the preferred embodiments, and it will be obvious to those skilled in the art that various changes and modifications may be made without department from the spirit and scope of the claimed inventions. The specification and drawings are, accordingly, to be regarded in an illustrative rather than restrictive sense. The claimed inventions are intended to cover alternatives, modifications, and equivalents.

## Claims

1. A DC charging distribution unit (UU1), comprising:
a first primary-side terminal (UU1F1) for receiving a first input current from a power unit (PU, PU1, PU2);
a secondary-side DC vehicle connection terminal (UU1S2) connectible to a vehicle for providing a vehicle charging current (id1);
a first secondary-side power sharing terminal (UU1S3) connectible to another DC charging distribution unit; and
a current distributor (S1; S1-1, S1-2, S1-3) being operable to select between:
- a vehicle-charging configuration in which the first input current is used to feed the secondary-side DC vehicle connection terminal (UU1S2) with the vehicle charging current; and
- a power-sharing configuration in which the first input current is used to feed the first secondary-side power sharing terminal (UU1S3) with the sharing current.

2. The distribution unit of claim 1, further comprising a second secondary-side power sharing terminal (UU1S1) connected to the first primary-side terminal (UU1F1) and connectible to yet another DC charging distribution unit for obtaining input power from the second secondary-side power sharing terminal (UU1S1).

3. The distribution unit of claim 1 or claim 2, further comprising a second primary-side terminal (UU1F2) for receiving a second input current from a power unit (PU, PU1, PU2), wherein the current distributor is operable to select further between:
- a combined input configuration in which the first and second primary-side terminals are combined; and
- an individual-input configuration in which the first and second primary-side terminals are disconnected from each other.

4. The distribution unit of any one of the preceding claims, further including a power converter configured to convert the first and/or second input currents into the vehicle charging current and/or the sharing current.

5. The distribution unit of any one of claims 1 through 3, wherein the current distributor is a switch assembly, wherein the first and/or second input currents are each DC currents, wherein the vehicle-charging configuration is a vehicle-charging switch configuration in which the first primary-side terminal (UU1F1) is connected to the secondary-side DC vehicle connection terminal (UU1S2), wherein the power-sharing configuration is a power-sharing switch configuration in which the first primary-side terminal (UU1F1) is connected to the first secondary-side power sharing terminal (UU1S3).

6. The distribution unit of claim 5 where dependent from claim 3, wherein the individual-input configuration includes
- a vehicle-charging configuration, in which the first primary-side terminal (UU1F1) but not the second primary-side terminal (UU1F2) is connected to the secondary-side DC vehicle connection terminal (UU1S2); and
- an individual-power-sharing configuration in which the second primary-side terminal (UU1F2) but not the first primary-side terminal (UU1F1) is connected to the first secondary-side power sharing terminal (UU1S3).

7. A DC charging system comprising at least one power unit (PU, PU1, PU2) and at least a first distribution unit (UU1) according to any one of the preceding claims and a second distribution unit (UU2) according to any one of the preceding claims, wherein each power unit (PU, PU1, PU2) includes at least one power terminal (PT1...PT8),
wherein the distribution units (UU1, UU2) are each spaced apart from the power unit by at least a first distance (d1) and wherein neighboring ones of the distribution units are spaced apart from each other by at most a second distance (d2);
wherein neighboring ones of the distribution units (UU1, UU2) are connected to one another, at their secondary-side power sharing terminals (UU1S1, UU1S3; UU2S1, UU2S3), via a first secondary-side link (SSL1);
wherein at least one of the primary-side terminals (UU1F1, UU1F2; UU2F1, UU2F2) of the first and second distribution units (UU1, UU2) is electrically connected, via a primary-side link (FSL11, FSL12; FSL21, FSL22), to the power terminal (PT1...PT8) of the at least one power unit (PU, PU1, PU2).

8. The DC charging system according to claim 7, wherein a maximum vehicle charging current at the secondary-side DC vehicle connection terminal (UU1S2) of the first distribution unit (UU1) is less than or equal the sum of a current carrying capacity of the primary-side link of the first user unit and a current carrying capacity of the secondary-side link between the first user unit (UU1) and the second user unit (UU2).

9. The DC charging system according to any one of claims 7or 8, further comprising a third distribution unit (UU3) according to any one of claims 1 through 6,
wherein the distribution units are connected to one another, at their secondary-side power sharing terminals (UU1S1, UU1S3; UU2S1, UU2S3; UU3S1, UU2S3), via respective secondary-side links (SSL1, SSL2);
wherein a maximum vehicle charging current at the secondary-side DC vehicle connection terminal (UU1S2) of the first distribution unit (UU1) is less than or equal to the sum of the current-carrying capacities of the primary-side links (FSL11, FSL12, FSL13) of the first through third user units (UU1, UU2, UU3); and
wherein the current carrying capacities of the secondary-side link (SSL1) between the first distribution unit (UU1) and the second distribution unit (UU2) and of the secondary-side link (SSL2) between the second distribution unit (UU2) and the third distribution unit (UU3) are designed to be at least said sum.

10. The DC charging system according to any one of claims 7 through 9, wherein the first secondary-side power sharing terminals (UU1S3, UU2S3, UU3S3) of each distribution unit (UU1, UU2, UU3) and its respective neighboring distribution unit (UU1, UU2, UU3) are connected to each other via a respective secondary-side link (SSL1, SSL2).

11. The DC charging system according to any one of claims 7 through 9, wherein the first secondary-side power sharing terminal (UU1S3, UU2S3, UU3S3) of each distribution unit (UU1, UU2, UU3) is connected to the second secondary-side power sharing terminal (UU1S1, UU2S1, UU3S1) of its respective neighboring distribution unit (UU1, UU2, UU3).

12. The DC charging system according to any one of claims 7 through 11, wherein each power terminal is a DC power terminal.

13. The DC charging system according to any one of claims 7 through 12, wherein the first distance is 10m or more, optionally 20m or more, or 50m or more; and/or
wherein the second distance is shorter than the first distance, optionally at most 30%, 20%, or 10% of the first distance.

14. The DC charging system according to any one of claims 7 through 13, further comprising a control unit configured to:
determine a request value of the vehicle charging current;
determine a current-carrying capacity of the primary-side link of the first distribution unit (UU1);
determine a current-carrying capacity of the secondary-side link between the first distribution unit (UU1) and the second distribution unit (UU2);
control each of the current distributors such that the sum of the current-carrying capacities matches or exceeds the request value.

15. The DC charging system according to claim 14, wherein the current distributors are each switch assemblies, and wherein control unit is further configured to determine one or more short-circuit-safe positions for each of the switch assemblies, and to control each of the switch assemblies to be only in any of the determined short-circuit-safe positions.
